# EUROPEAN PATENT SPECIFICATION

(11) **EP 2 084 593 B1**
(45) Date of publication and mention of the grant of the patent: **09.05.2018**
(21) Application number: 07854003.6
(22) Date of filing: 12.10.2007
(51) Int. Cl.: G06F 3/00, G06F 9/44, G06F 17/30

(54) **DATA QUALITY AND STATUS BEHAVIOR FOR HUMAN MACHINE INTERFACE GRAPHICS IN INDUSTRIAL CONTROL AND AUTOMATION SYSTEMS**
DATENQUALITÄT UND STATUSVERHALTEN FÜR MENSCH-MASCHINE-SCHNITTSTELLENGRAFIK FÜR INDUSTRIELLE STEUERUNGS- UND AUTOMATISIERUNGSSYSTEME
COMPORTEMENT D'ÉTAT ET DE QUALITÉ DE DONNÉES POUR DES ÉLÉMENTS GRAPHIQUES D'INTERFACE HOMME-MACHINE DANS DES SYSTÈMES INDUSTRIELS DE COMMANDE ET D'AUTOMATISATION

(30) Priority: 16.10.2006 US 549801
(43) Date of publication of application: 05.08.2009
(73) Proprietor: Invensys Systems, Inc., Foxboro, MA 02035 (US)
(72) Inventor: KRAJEWSKI, John Joseph III, Huntington Beach, California 92648 (US); FRANCOIS, Frederic Andre Gerard, Redmond, WA 98053 (US); MCINTYRE, James Paul, San Jose, California 95124 (US); ANDERSON, Jerome Richard Jr., Aliso Viejo, California 92656 (US)
(74) Representative: Friese Goeden Patentanwälte PartGmbB
(86) International application number: PCT/US2007/081233
(87) International publication number: WO 2008/048892

(56) References cited:
- US-A- 5 799 298
- US-A- 5 819 028
- US-A- 5 883 639
- US-A- 6 108 616
- US-A1- 2003 090 453
- US-A1- 2005 060 408
- US-A1- 2005 234 884
- US-B1- 6 330 007
- US-B1- 6 330 007
- CHRISTINE M MITCHELL: "GT-MSOCC: A Domain for Research on Human -Computer Interaction and Decision Aiding in Supervisory Control Systems" IEEE TRANSACTIONS ON SYSTEMS, MAN AND CYBERNETICS, IEEE INC. NEW YORK, US, vol. 17, no. 4, 1 July 1987 (1987-07-01), pages 553-572, XP011245571 ISSN: 0018-9472
- NAKAMURA A ET AL: "Multiple mobile robot operation by human" ROBOTICS AND AUTOMATION, 1998. PROCEEDINGS. 1998 IEEE INTERNATIONAL CO NFERENCE ON LEUVEN, BELGIUM 16-20 MAY 1998, NEW YORK, NY, USA,IEEE, US, vol. 4, 16 May 1998 (1998-05-16), pages 2852-2857, XP010281334 ISBN: 9780780343009
- BELTRAN-ESCAVY J ET AL: "Human-Robot GUI System with Group Control for Multiple Mobile Robot Systems - Graphic Interface and Comparison with Previous Joystick-based System" INTERNATIONAL JOURNAL OF THE JAPAN SOCIETY OF PRECISION ENGINEERING, vol. 32, no. 4, 1 December 1998 (1998-12-01), pages 291-296, XP002550727 Tokyo, Japan
- BELTRAN-ESCAVY J ET AL: "Human-Robot GUI System with Group Control for Multiple Mobile Robot Systems - System Monitoring" INTERNATIONAL JOURNAL OF THE JAPAN SOCIETY OF PRECISION ENGINEERING, vol. 33, no. 2, 1 June 1999 (1999-06-01), pages 149-155, XP002550728 Tokyo, Japan
- BELTRAN-ESCAVY J ET AL: "Human-Robot GUI System with Group Control for Multiple Mobile Robot Systems - Introduction to Virtual Constrains" INTERNATIONAL JOURNAL OF THE JAPAN SOCIETY OF PRECISION ENGINEERING, vol. 33, no. 3, 1 September 1999 (1999-09-01), pages 265-270, XP002550729 Tokyo, Japan

## Description

### TECHNICAL FIELD

The present invention generally relates to the field of networked computerized industrial control and automation systems. More particularly, the present invention relates to human machine interfaces (HMI) utilized in association with industrial control and automation systems to facilitate viewing the status and operation of physical equipment and related information at a supervisory level. The HMI is generally connected to lower level control elements such as, by way of example, programmable logic controllers or distributed control systems (DCSs). Such systems are also employed to acquire and manage historical information relating to such processes and their associated output.

### BACKGROUND

Industry-increasingly depends upon highly automated data acquisition and control systems to ensure that industrial processes are run efficiently and reliably while lowering their overall production costs. Data acquisition begins when a number of sensors measure aspects of an industrial process and report their measurements back to a data collection and control system. Such measurements come in a wide variety of forms. By way of example the measurements produced by a sensor/recorder include: a temperature, a pressure, a pH, a mass/volume flow of material, a counter of items passing through a particular machine/process, a tallied inventory of packages waiting in a shipping line, cycle completions, etc. Often sophisticated process management and control software examines the incoming data associated with an industrial process, produces status reports and operation summaries, and, in many cases, responds to events/operator instructions by sending commands to actuators/controllers that modify operation of at least a portion of the industrial process. The data produced by the sensors also allow an operator to perform a number of supervisory tasks including: tailor the process (e.g., specify new set points) in response to varying external conditions (including costs of raw materials), detect an inefficient/non-optimal operating condition and/or impending equipment failure, and take remedial action such as move equipment into and out of service as required.

Typical industrial processes are extremely complex and receive substantially greater volumes of information than any human could possibly digest in its raw form. By way of example, it is not unheard of to have thousands of sensors (analog/digital) and control elements (e.g., valve actuators, motors, etc.) monitoring/controlling aspects of a multi-stage process within an industrial plant. The sensors are of varied type and report on varied characteristics of the process. Their outputs are similarly varied in the meaning of their measurements, in the amount of data sent for each measurement, and in the frequency of their measurements. As regards the latter, for accuracy and to enable quick response, some of these sensors/control elements take one or more measurements every second. When multiplied by thousands of sensors/control elements, the large number of periodic readings results in so much data flowing into the control and manufacturing information management system that sophisticated data management and process visualization techniques/applications are required.

Highly advanced human-machine interface/process visualization systems exist today that are linked to data sources such as the above-described sensors and controllers. Such systems acquire and digest (e.g., filter) the process data described above. The digested process data in-turn drives visualization applications rendering/presenting graphical views of the process for observation by human operators. An example of such system is the well-known Wonderware IN-TOUCH® human-machine interface (HMI) software system for visualizing and controlling a wide variety of industrial processes and manufacturing information. An IN-TOUCH® HMI process visualization application includes a set of graphical views of a particular process and its physical output. Each view, in turn, comprises one or more graphical elements. The graphical elements are potentially "animated" in the sense that their display state changes over time in response to associated/linked data sources. For example, a view of a refining process potentially includes a tank graphical element. The tank graphical element has a visual indicator showing the level of a liquid contained within the tank, and the level indicator of the graphical element rises and falls in response to a steam of data supplied by a tank level sensor indicative of the liquid level within the tank. Animated graphical images driven by constantly changing process data values within data streams, of which the tank level indicator is only one example, are considerably easier for a human observer to comprehend than a steam of numbers. Graphical images provided by HMI applications are also used to depict, and facilitate modifying, current process set points. For this reason process visualization systems, such as IN-TOUCH, have become essential components of supervisory process control and manufacturing information systems.

In WONDERWARE's ARCHESTRA HMI and supervisory control environment, physical plant floor devices are modeled by software elements generally referred to as Automation Objects. In known ARCHESTRA-based systems, Automation Objects for performing particular data acquisition and process representation tasks were defined as variables, scripts, alarm and history behavior that run on an application engine. Each of these parts of an Automation Object are referred to as "facets". The application engine cyclically executes the facets of the hosted Automation Objects. A more recent development in the ARCHESTRA relates to the introduction of a graphic facet in an automation object (resulting in an HMI object) that is hosted by a view engine. The graphics facets support configurable animations that are linked to readable/writable data associated with objects maintained in a global configuration database in the system.

ARCHESTRA relies upon Message Exchange to support inter-object communications both locally and between nodes on a network. Message Exchange supports/provides information about the data quality, the read status, and the write status of all information it passes. It is important for users to know the quality/status of information driving a graphical element. For example, a non-changing graphical status might be the result of an interrupted connection or a frozen process state.

Previously, to the extent configurable data quality and status were supported in graphics, they were configured/defined on an individual basis. In other products a fixed subset of all data quality and status information was supported. However, the pre-defined graphical displays of data quality and status could not be changed/augmented on a global basis by application developers.

Document US5883639 (Walton et al.) discloses a system for providing a simple, easy to learn and flexible means of creating user interfaces to products under development without the need of a programming language or the need to learn a large set of complicated commands. The Visual Software Engineering ("VSE") system of the invention uses a simple concept of defining both input to and output from graphical objects in an object-oriented system by providing examples of what the user desires the graphical object to do. This technique is referred to herein as "animation by example". In accordance with this process, the user creates a user interface by drawing the user interface with a graphics editor and then defining the output behavior (i.e., graphics manipulation) of the user interface components by showing each state or frame as an animation. This is accomplished by changing the object using a graphic editor function such as move or rotate and storing each of the frames with the object as a behavior state. Just as with defining the output, the input is defined by giving the graphic object an example of what type of input to look for, and once it finds that input, it tells the object which frame to output or change to. Application code can then drive the animation or read the input by accessing the frame numbers assigned to each of the example frames.

### SUMMERY OF THE INVENTION

The present invention addresses a need to provide better ways of implementing presentation of data quality and status on an HMI for industrial automation and control systems by providing a centralized definition of data quality and status behaviors. The centralized definition is thereafter applied to every graphical element that is linked to a data value for which status is maintained/provided. A first aspect of the present invention concerns a networked computer system for facilitating centralized management of configuration and propagation of data quality and status behaviors for graphical elements within human machine interface (HMI) applications distributable across multiple nodes of the system, the networked computer system comprising: a computer node including a computer-readable medium comprising a configuration database for maintaining a global data quality and status behaviors definition in a central configuration storage; a computer node including a computer-readable medium comprising computer-executable instructions for a definition editor including a user interface supporting designation of data quality and status behaviors defined within the global data quality and status behaviors definition; and wherein the computer node including the configuration database comprises further computer-executable instructions for a definition distribution mechanism for propagating changes to the global data quality and status behaviors definition to a set of remote nodes executing HMI applications on a network, wherein the HMI applications include graphics associated with data having associated qualities and statuses.

A further aspect of the present inventions concerns a method for configuring and propagating data status behaviors for graphical elements within human machine interface (HMI) applications distributable across multiple nodes of a networked computer system, the method comprising: maintaining, by a computer node including a computer-readable medium comprising a configuration database, a global data quality and status behaviors definition in a central configuration storage; providing a definition editor on a computer node, the definition editor including a user interface supporting designation of data quality and status behaviors defined within the global data quality and status behaviors definition; and wherein the computer node including the configuration database comprises further computer-executable instructions for a definition distribution mechanism, and the method comprises the further step of propagating, by the definition distribution mechanism, changes to the global data quality and status behaviors definition to a set of remote nodes executing HMI applications on a network, wherein the HMI applications include graphics associated with data having associated qualities and statuses. Furthermore, another aspect involves the introduction of a status graphic element type. The status graphical element, whose overriding behavior is configured in the centralized behavior definition, is defined to examine a designated data variable and display a picture or icon indicating the quality or status of the data.

### BRIEF DESCRIPTION OF THE DRAWINGS

While the appended claims set forth the features of the present invention with particularity, the invention, together with its objects and advantages, may be best understood from the following detailed description taken in conjunction with the accompanying drawings of which:
FIG. 1 is a schematic diagram depicting an exemplary supervisory process control network including a multi-layered supervisory process control and manufacturing information application including a set of personal computers having view engines and associated human-machine interface (HMI) application objects;
FIG. 2 depicts a multi-tiered object hosting arrangement for hosting applications on platforms and engines within an exemplary system embodying the present invention;
FIG. 3 depicts an exemplary set of attributes for a view engine object custom primitive;
FIG. 4 depicts an exemplary set of attributes for an HMI application object custom primitive;
FIGs. 5a-e depict a layout and set of screen displays associated with a dialog for configuration of a centralized definition for data quality and status behaviors for displayed HMI graphical elements; and
FIG. 6 provides an exemplary default set of icons associated with a status graphic drawing element and their corresponding quality/status triggers.

### DETAILED DESCRIPTION OF THE DRAWING

The following description is based on embodiments of the invention and should not be taken as limiting the invention with regard to alternative embodiments that are not explicitly described herein. By way of example, the present invention is incorporated within a supervisory process control and manufacturing information application development and runtime environment wherein individual data sources (e.g., process equipment and associated logic) are represented by application objects. An example of such system is described in detail in Resnick et al., U.S. Application Serial No. 10/179,668 filed on June 24, 2002, for SUPERVISORY PROCESS CONTROL AND MANUFACTURING INFORMATION SYSTEM APPLICATION HAVING A LAYERED ARCHITECTURE. However, as those skilled in the art will appreciate in view of the disclosed exemplary embodiments, the present invention is potentially applicable to a variety of alternative supervisory process control and manufacturing information application development and runtime environments.

The disclosure herein is directed primarily to an infrastructure and related methods for centrally managing HMI applications (e.g., INTOUCH applications) within a supervisory process control and manufacturing information application environment comprising potentially many networked HMI nodes running separate instances of a previously defined HMI application. The disclosure includes a description of an HMI application encapsulated within a reusable HMI application template. Thereafter, HMI application objects are instantiated from the HMI application template and installed on a designated networked HMI node.

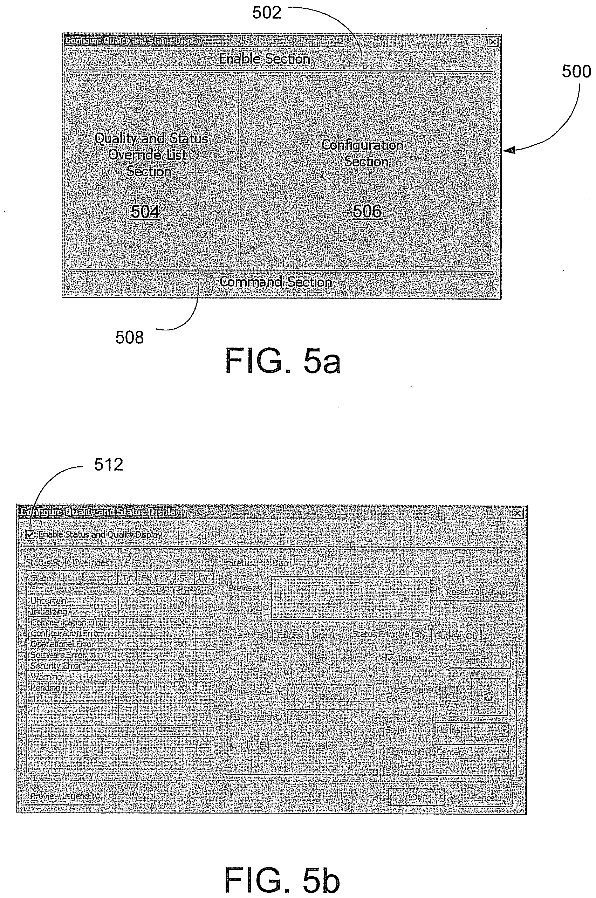

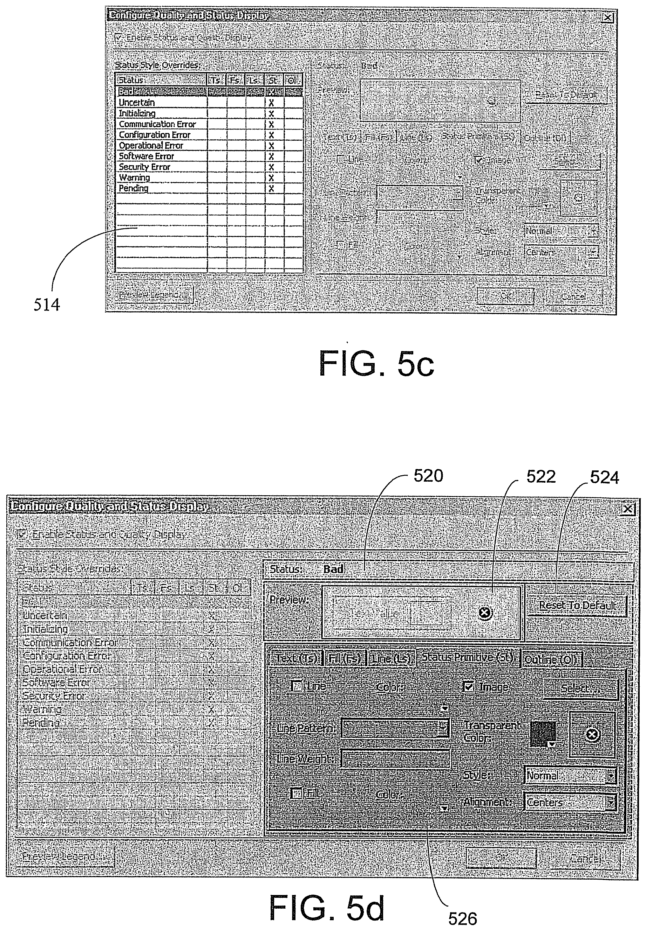

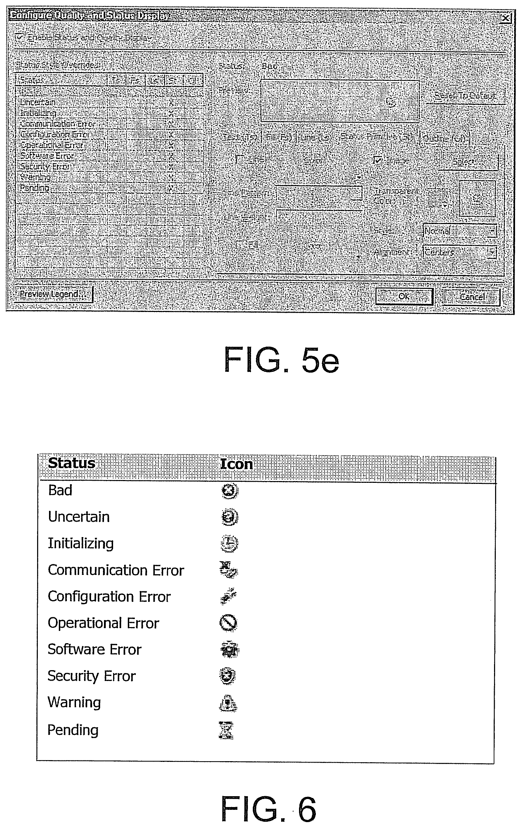

A second aspect of centrally managing HMI applications disclosed herein relates to propagating changes to symbols making up a portion of the graphics of an HMI application template into a set of HMI application object templates. By way of example, a symbol template is globally defined outside the HMI application. The symbol graphics are incorporated into HMI application templates via a reference to the centrally managed symbol template. The use of symbol templates to define symbol graphics for HMI applications facilitates propagating changes (using the aforementioned cross-reference lists) to the symbol templates down to all child symbol templates as well as all HMI application templates that incorporate by reference the changed original and derived child symbol templates. Such relationships and propagation paths are described further herein below with reference to **FIG. 5****.**

A third aspect of centrally managing HMI applications disclosed herein relates to maintaining and graphically presenting a status for HMI objects in various views (e.g., deployment, derivation, model, etc.) of the contents of the configuration database 124 via the IDE 126. Examples of current status include: checked in/out, deployed/undeployed, and changed. Each of these exemplary statuses enables users to make decisions with regard to distributing instances of an HMI application.

Yet another aspect of the disclosed central management arrangement is the ability of users to edit an existing HMI application definition (template) from a remotely deployed configuration tool such as an Integrated Development Environment (IDE) facility.

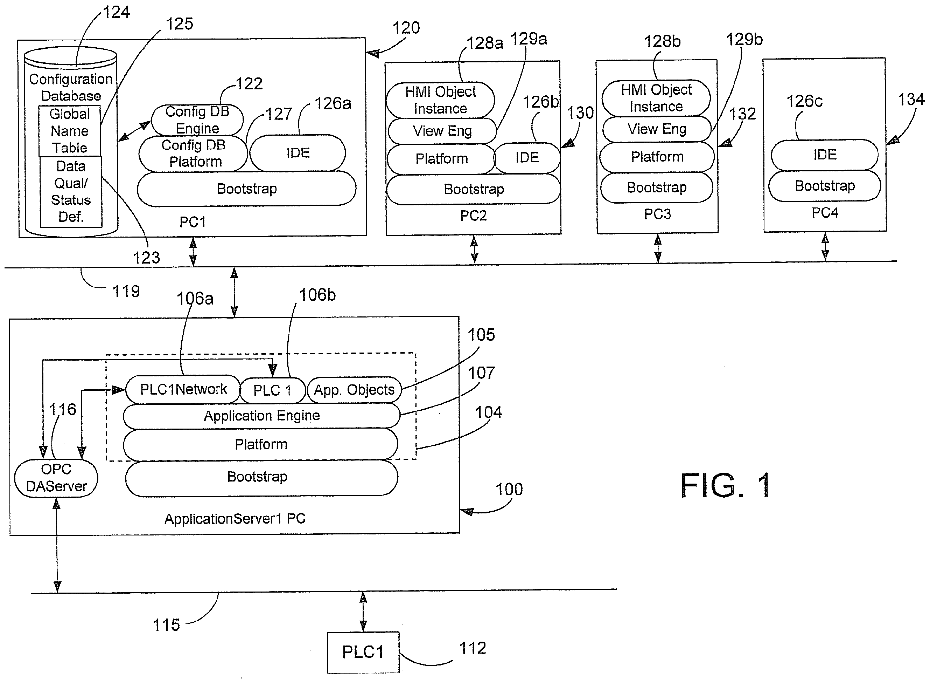

Referring to **FIG. 1****,** a schematic diagram depicts hosting/hierarchical relationships of components within an exemplary distributed/networked supervisory process control environment. In the exemplary network, each of the multiple computing hardware nodes (PCs 100, 120, 130, 132, 134) run bootstrap software that operates as the host for subsequently loaded platform objects and a development tool referred to herein as the IDE facility. Thereafter, platform object instances are installed on the PCs. Only one platform object can be installed on each PC. The platform objects host and provide services to subsequently installed engine objects. The engines objects, in turn, potentially operate as hosts to subsequently installed HMI, device integration and application objects. The engine objects are distinguished by there differing services/hosting capabilities - and thus the type of objects they host. For example, view engines host HMI object instances while application engines host device integration objects and application objects. The various types of objects mentioned above are described further herein below.

With continued reference to **FIG. 1****,** multiple PCs 120, 130 and 134 run an integrated design and development tool (IDE 126a-c). The IDE 126 is utilized by developers to configure and deploy components, including application objects, of a supervisory process control and manufacturing information system to designated PC nodes attached to an engineering network 119. The IDE 126 is a utility (comprising potentially multiple components) from which process control and manufacturing information applications, including application objects and engines, are defined, created and deployed to a variety of platforms/engines including, for example, the application server PC 100. Developers of a supervisory process control and manufacturing information application, through the IDE 126, carry out a wide variety of application design functions including: importing new object and template types, configuring new templates from existing templates, defining new application objects, and deploying the application objects to the host application engines (e.g., AppEngine1 on the application server PC 100). The IDE 126 is also where HMI templates, incorporating previously developed HMI applications, are defined and resulting HMI objects are instantiated and deployed to target PCs having a previously installed view engine (e.g., view engines 129a and 129b).

The IDE 126 copies operate upon a set of object templates stored in a configuration database 124 (e.g., Galaxy database) wherein the names of the defined object templates are maintained in a global name table 125. The global name table 125 facilitates binding location independent object names to location-derived handles facilitating routing messages between objects within the system depicted in **FIG. 1****.** The configuration database 124 stores, for a configured application component, object data as well as any code or documents associated with the configured objects. The configuration database 124 stores both base object templates and derived templates for the various objects (e.g., application engines, application objects, view engines and HMI objects) depicted in **FIG. 1****.** An exemplary visualization HMI application object derivation and instance creation scheme is depicted herein below with reference to **FIG. 5****.** In an exemplary embodiment, the configuration database 124 comprises a MICROSOFT SQL server.

The contents of the configuration database 124 are accessed via a configuration database engine 122, also known as a galaxy repository. The configuration database engine 122 supports remote, multi-user access via the IDE 126 copies through graphically presentable check-in/check-out status descriptors for each defined object in the configuration database 124. The configuration database engine 122 also supports deployment of objects and software from a centralized source to other nodes on the system.

In accordance with an illustrative embodiment, a data quality and status behavior definition 123 is stored within the configuration database 124. From this centralized location, a global data distribution mechanism automatically delivers the new version of the definition 123 to all the runtime nodes without further user intervention. The definition 123, specifying animated graphical behaviors in response to data statuses, is shared across the entire set of nodes and HMI applications that fall within the scope of the configuration database 124, and is not specific to any individual node or HMI application.

In the illustrative embodiment, the configuration database engine 122 is hosted by a configuration database platform 127. The configuration database platform 127 is generally the same as the other platforms installed on the PCs in the system. However, the configuration database platform 127 is assigned a unique status (and corresponding name) within the system as the platform associated with the single active configuration database 124. Thus, the disclosed system includes a single, centrally managed configuration database. In alternative embodiments, multiple copies of the contents of the database 124 are maintained (e.g., a read-only or backup copy of the contents of the database 124) on multiple nodes in the system. In the illustrative embodiment, the configuration database platform 127 and the hosted configuration database engine 122 perform the specialized functions of: data/software distribution, maintaining the global name table 125, resolving (using the name table 125) globally unique location-independent reference strings to location-derived handles (for message exchange), administering security/limited access to resources in a multi-user environment, versioning, centralized license management and importing/exporting object templates and instances.

The IDE 126 supports a variety of configuration operations involving the configuration database 124. By way of example, engineers utilize the IDE 126 to import new object templates into the configuration database 124 (via the configuration database engine 122), configure new object templates, and deploy the objects to designated PCs on the engineering network 119. As noted above, multiple copies of the IDE 126 residing on distinct network nodes are capable of accessing and editing the object definitions, including HMI application definitions and symbol definitions that are potentially incorporated into the HMI application definitions (templates).

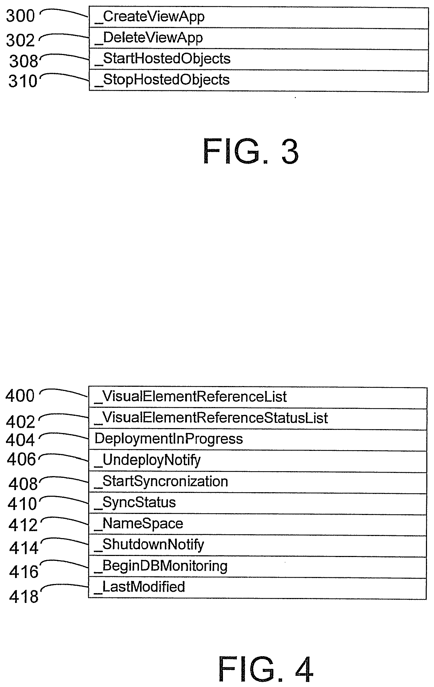

In the illustrative example, multiple HMI object instances 128a-b are deployed on multiple hardware nodes (PCs 130 and 132). The HMI object instances 128a-b, described further herein below with reference to **FIG. 4****,** provide a graphical view/window representing a current status of a process/plant or portion thereof based upon information obtained via device integration and application objects from devices/controllers residing on a plant floor network 115. A single view engine hosts multiple distinct HMI object instances corresponding to various configured process/plant views driven by information provided by, for example a connected field device or PLC (e.g., PLC 112). In the exemplary embodiment, the HMI object instances 128a-b are hosted by view engines 129a-b (described herein below with reference to **FIG. 3**) in a multi-layered supervisory process control and manufacturing information system architecture. While only a single HMI object instance is shown for each view engine in **FIG. 1****,** each view engine is capable of simultaneously hosting multiple HMI object instances.

The hosted relationship between HMI object instances 128 and corresponding view engines 129 facilitate access to certain services supported by the view engines 129. By way of example the view engines 129 support updating the hosted HMI object instances 128 independently (automatic change propagation when corresponding templates are updated). Also, the view engines 129 cache (on the associated network node) the displays associated with the HMI object instances 128.

Turning to the application server1 PC 100 on the engineering network 119, in the illustrative embodiment, data sources are presented, by way of example, in the form of application objects 105. The application objects 105 carry out a variety of functions including, representing the status of process equipment and associated application logic. The application objects carry out any of a variety of monitoring/control functions while positioned at an application level of the illustrated distributed hierarchical supervisory process control and manufacturing application architecture. Device integration objects 106a and 106b, situated at an application level as well in the hierarchy, represent data sources on a plant floor network such as PLCs (PLC1), smart field devices, and associated I/O networks (e.g., PLC1 network).

The application objects and device integration objects communicate with one another both locally (within a single personal computer) and through non-local communications with objects hosted on personal computers attached to the engineering network 119.

The application objects 105 are identified, by way of example, within the global name table 125 maintained by the configuration database 124 (e.g., the WONDERWARE Galaxy Repository) - the contents of which are made available to a developer via, for example the IDE 126a-c and HMI object instances 128 a-b that, by way of example, incorporate INTOUCH applications and their associated displays. Thus, in accordance with an embodiment of the present invention, a dynamic graphical view of a plant/process in the form of an INTOUCH application is initially created using, for example, the WINDOWMAKER utility. The entire INTOUCH application is thereafter incorporated into an HMI object template including necessary components for use in the multi-leveled application execution environment described herein. The resulting HMI object template is stored/maintained/managed in the configuration database 124. Thereafter, subsequent derived versions of the base template are maintained as children, and retain an inheritance relation, with the parent HMI object template. The original and derived templates are available for distribution via the IDE 126 to appropriate nodes on the network 119 containing a previously installed view engine (e.g. view engine 129a).

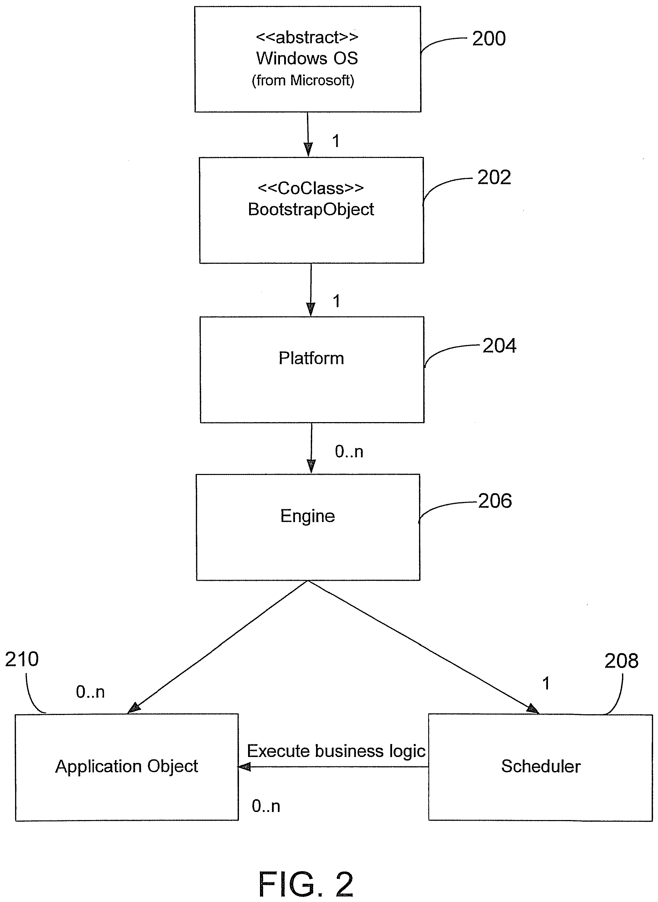

With continued reference to **FIG. 1****,** the application server1 PC 100 executes a multi-layered supervisory process control and manufacturing information application comprising a first portion 104. The application portion 104 includes the application objects 105 and device integration objects PLC1Network 106a and PLC1 106b. The PLC1Network 106a device integration object facilitates configuring a data access server (e.g., OPC DAServer 116). The PLC1 106b device integration object, operating as an OPC client, accesses data locations within the buffers of the OPC DAServer 116. The data access server 116 and the device integration objects cooperatively import and buffer data from external process control components such as PLCs (e.g., PLC1 112) or other field devices (not depicted) on the plant floor network 115. An application engine 107 hosts both the application objects 105 and device integration objects 106a and 106b. The application engine 107, as a host, manages periodic/event driven execution of the hosted application and device-integration objects. The aforementioned components of the hierarchical hosting arrangement on the PC 100 are described herein below with reference to **FIG. 2****.**

In the illustrative example, requests for data are submitted via the data access server 116 to retrieve data from the PLC1 112. The retrieved data is thereafter used by the HMI object instances 128a and 128b to drive graphical displays representing, for example, the status of plant floor equipment. The data buffer of the data access server 116 is accessed (directly/indirectly) by the variety of application-level objects (e.g., application objects 105, PLC1Network 106a, PLC1 106b, etc.) executing upon the personal computer 100. Examples of application objects represent data sources and logic including, by way of example, discrete devices, analog devices, field references, events/triggers, production events, etc. In an exemplary embodiment, information obtained/provided by the application-level objects 105, 106a and 106b is stored in a runtime (Historian) process information database (not shown). The data is thereafter obtained by the HMI object instances 128a-b to drive a display state of animated process graphics.

The data access server 116 is, by way of example, an OPC Server. However, those skilled in the art will readily appreciate the wide variety of custom and standardized data formats/protocols that are potentially carried out by the data access server 116. Furthermore, the exemplary application-level device integration objects 106a and 106b, through connections to the data access server 116, represent a PLC network and the operation of the PLC itself. However, the application-level objects (e.g., device integration and application objects) hosted by the application engine 107 comprise a virtually limitless spectrum of classes of executable objects that perform desired supervisory control and data acquisition/integration functions in the context of the supervisory process control and manufacturing information application.

The supervisory process control and manufacturing information system is potentially integrated with a variety of processes/plant information sources via a variety of communication channels. The exemplary system including the multi-layered application comprising portion 104 is communicatively coupled to the PLC1 112. The PLC1, in turn, receives plant equipment status information via the plant floor network 115. In a particular embodiment, the PLC 112 comprises a node on an Ethernet LAN to which the PC 100 is connected. In other embodiments, the PLC 112 is linked directly to physical communication ports on the PC 100. In still other alternative embodiments the PC 100 receives data from field I/O modules that receive, for example, analog data from field devices that operate in a distributed regulatory control system.

It is noted that the system depicted in **FIG. 1** and described hereinabove is merely an example of a system including a multi-layered hierarchical architecture for a supervisory process control and manufacturing information system. It is further noted that **FIG. 1** is presented as a logical view of the hosting and/or containment interrelations between installed components including software and physical computing hardware. The system disclosed herein is suitable for virtually any network topology. For example, the present invention is applicable to a system wherein both configuration utility and supervisory process control visualization applications run on a single computer system linked to a controlled process.

Turning to **FIG. 2****,** a class diagram depicts the hierarchical hosting arrangement of layered software, comprising computer-executable instructions, associated with a computer (e.g., PC 100) executing at least a portion of a supervisory process control and manufacturing information application. The computer executes an operating system 200, such as MICROSOFT's WINDOWS at a lowest level of the hierarchy. The operating system 200, hosts a bootstrap object 202. The bootstrap object 202 is loaded onto a computer and activated in association with startup procedures executed by the operating system 200. As the host of a platform class object 204, the bootstrap object 202 must be activated before initiating operation of the platform class object 204. The bootstrap object 202 starts and stops the platform class object 204. The bootstrap object 202 also renders services utilized by the platform class object 204 to start and stop one or more engine objects 206 hosted by the platform class object 204.

The platform class object 204 is host to one or more engine objects 206. In an embodiment of the invention, the platform class object 204 represents, to the one or more engine objects 206, a computer executing a particular operating system. The platform class object 204 maintains a list of the engine objects 206 deployed on the platform class object 204, starts and stops the engine objects 206, and restarts the engine objects 206 if they crash. The platform class object 204 monitors the running state of the engine objects 206 and publishes the state information to clients. The platform class object 204 includes a system management console diagnostic utility that enables performing diagnostic and administrative tasks on the computer system executing the platform class object 204. The platform class object 204 also provides alarms to a distributed alarm subsystem.

The engine objects 206 host a set of application objects 210 that implement supervisory process control and/or manufacturing information acquisition functions associated with an application. The engine objects 206 initiate startup of all application objects 210. The engine objects 206 also schedule execution of the application objects 210 with regard to one another with the help of a scheduler object 208. Engine objects 206 register application objects 210 with the scheduler object 208 for execution. The scheduler object 208 executes application objects relative to other application objects based upon a configuration specified by a corresponding one of the engine objects 206. The engine objects 206 monitor the operation of the application objects 210 and place malfunctioning ones in a quarantined state. The engine objects 206 support check pointing by saving/restoring changes to a runtime application made by automation objects to a configuration file. The engine objects 206 maintain a name binding service that binds attribute references (e.g., tankl.value.pv) to a proper one of the application objects 210. The engine objects 206 perform similar functions with regard to hosted device integration objects.

The engine objects 206 ultimately control how execution of associated ones of the application objects 210 will occur. However, once the engine objects 206 determine execution scheduling for application objects 210, the real-time scheduling of their execution is controlled by the scheduler 208. The scheduler 208 supports an interface containing the methods RegisterAutomationObject() and UnregisterAutomationObject() enabling engine objects 206 to add/remove particular ones of the application objects to/from the scheduler 208's list of scheduled operations.

The application objects 210 include a wide variety of objects that execute business logic facilitating carrying out a particular process control operation (e.g., turning a pump on, actuating a valve), and/or information gathering/management function (e.g., raising an alarm based upon a received field device output signal value) in the context of, for example, an industrial process control system. Examples of process control (automation) application objects include analog input, discrete device, and PID loop objects. A class of the application objects 210 act upon data supplied by process control systems, such as PLCs, via device integration objects (e.g., OPC DAServer 118). The function of the device integration objects, which are also hosted by engine objects, is to provide a bridge/data path between process control/manufacturing information sources and the supervisory process control and manufacturing information application.

The application objects 210, in an exemplary embodiment, include an application interface accessed by the engine objects 206 and the scheduler 208. The engine objects 206 access the application object interface to initialize an application object, startup an application object, and shutdown an application object. The scheduler 208 uses the application object interface to initiate a scheduled execution of a corresponding application object.

Having described the relationships between bootstrap, platform, engine and application objects in an exemplary multi-layered, hierarchically arranged supervisory process control and manufacturing information application, it is noted that a similar relationship exists with regard to the objects that make up the multi-layered architecture of an HMI application (see, e.g., HMI application layered architecture on PC2 130 in **FIG. 1**).

Turning to **FIG. 3****,** an exemplary set of attributes are identified for a view engine object custom primitive that augments the functionality of a basic engine to facilitate hosting a designated one of a set of available HMI object instances that have been deployed to a PC (e.g., PC 130). The content/functionality of a basic engine primitive is described in Resnick et al., U.S. Application Serial No. 10/179,668 filed on June 24, 2002, for SUPERVISORY PROCESS CONTROL AND MANUFACTURING INFORMATION SYSTEM APPLICATION HAVING A LAYERED ARCHITECTURE . View engine objects support the base engine functionality such as deployment, undeployment, startup, and shutdown. The view engine objects also support visualization application-specific functionality described further herein below. In an illustrative embodiment the view engine objects are specialized engine object types that host only HMI object instances - as opposed to application engines that are capable of hosting a variety of application-level objects including device integration objects and application objects.

The view engine (e.g., view engine 129a) hosts and schedules execution of designated HMI object instances. The view engine supports a set of runtime operations with regard to hosted HMI object instances based upon a currently occupied view engine runtime state. When a view engine is in a startup state hosted HMI objects are: initialized from a checkpoint, started by the view engine, registered with Message Exchange (or other suitable inter-object data communications service), and executed according to commands issued by a scheduler associated with the view engine. When the view engine enters an on-scan or off-scan state, the hosted HMI objects receive a notification of the view engine's new scan state. Furthermore, when a view engine enters a shutdown state, the hosted HMI objects are shutdown by their host engine.

In an exemplary embodiment, the view engine manages a list of HMI object instances deployed to it. The view engine, however, is not responsible for invoking the execution of scripts or reading and writing relevant process data associated with the HMI object instances. Instead, executing scripts and managing data subscriptions is delegated to HMI (e.g., INTOUCH) applications that are incorporated into (embedded/encapsulated within) corresponding HMI object instances. Thus, in the illustrative embodiment, an otherwise standalone HMI application, incapable of executing within the disclosed multi-layered hosting architecture depicted in **FIG. 1****,** is incorporated into an HMI wrapper object to provide such capability. As such, standalone legacy HMI (INTOUCH) applications can be seamlessly incorporated into a system embodying the hierarchical object-based architecture described herein above with reference to **FIGs. 1** **and** **2****.**

As noted above, the custom primitive for the view engine comprises a set of attributes that relate to hosting HMI application objects. The set of attributes identified in **FIG. 3** (described herein below) is intended to be exemplary and is modified in accordance with alternative embodiments of the invention.

In the illustrative embodiment, it is noted that the objects (e.g., platforms, engines, application objects, etc.) are defined with a set of data points, referred to herein as "attributes". Each attribute, in turn, potentially includes configuration and runtime handlers that process the object based upon the currently specified value of the attribute. In the exemplary embodiment, the handlers are events that are triggered and will have custom coded functionality. Configuration Set handlers are events that are triggered when the attribute is set using a configuration client (such as the IDE) and runtime set handlers are triggered when a runtime client (such as INTOUCH) sets the value of the attribute.

A_CreateViewApp attribute 300 creates a new HMI object instance when a designated HMI object template is designated for deployment to a view engine. A reference to the new HMI object instance is added to a list of deployed HMI objects that are managed by the view engine.

A _DeleteViewApp attribute 302 removes a previously deployed HMI object from a set of HMI objects presently deployed on the view engine. A corresponding reference to the HMI object is deleted from the list of deployed HMI objects on the view engine.

A_StartHostedObjects attribute 308 commences running all deployed HMI objects on the view engine. The initial state of the HMI objects is based upon values extracted from the checkpoint persistent storage.

A_StopHostedObjects attribute 310 commences shutting down all HMI object instances that are currently hosted by the view engine.

Turning to **FIG. 4****,** attention is directed to an exemplary set of attributes of a custom primitive for an HMI application object. The HMI application object carries out functionality associated with providing a graphical view portion of a distributed supervisory process control and manufacturing information application. The HMI application object, executing on a host view engine in the above-described hierarchical runtime environment, manages the checkin/out, editing, deployment, and runtime attribute monitoring of an incorporated HMI (INTOUCH) application that, in turn, provides a dynamic graphical view of a plant/process. The graphical state of the HMI application is driven by live data provided, for example, by plant equipment sensors, monitors, and controllers. Such information is extracted from the plant floor network via the device integration and application objects executing on an application engine (described herein above with reference to **FIG. 1**). The HMI object also supports referencing tags (Message Exchange) on application server hosted application-level objects through which dynamic process data is passed to the HMI application incorporated therein.

In the illustrative example HMI (e.g., INTOUCH) applications that execute scripts and manage data subscriptions are incorporated into (embedded/encapsulated within) corresponding HMI application object templates and instances. Thus, in the illustrative embodiment, an otherwise standalone HMI application, incapable of executing within the disclosed multi-layered hosting architecture depicted in **FIG. 1****,** is incorporated into an HMI application wrapper object that facilitates integrating (managing, running, etc.) the HMI application within systems that adopt the aforementioned hosted hierarchical runtime environment. As such, standalone legacy HMI (INTOUCH) applications can be seamlessly incorporated into a system embodying the hierarchical object-based architecture described herein above with reference to **FIGs. 1** **and** **2****.**

The aforementioned HMI wrapper object comprises a custom primitive including a set of attributes that relate to execution of an HMI application within the hosting environment supported by a view engine. The set of attributes identified in **FIG. 4** (described herein below) is intended to be exemplary and differs in accordance with alternative embodiments of the invention.

A_VisualElementReferenceList attribute 400 contains a listing of all visual elements (e.g., symbols) assigned to an HMI application object.

A_VisualElementReferenceStatusList attribute 402 specifies a current status of each symbol assigned to an HMI application object. The status can be used to convey a variety of statuses for symbols contained within the HMI application object including, for example, to show when a symbol has been deleted from the HMI application object.

A DeploymentInProgress attribute 404 is set to true while HMI application files, associated with an HMI application object, are being synchronized with the configuration database 124.

An_UndeployNotify attribute 406 specifies whether an HMI application object can be undeployed.

A_StartSyncronization attribute 408 is set to true to inform an HMI application object that it should begin transferring HMI application files for the application associated with HMI application object to a node where the HMI application object is deployed.

A_SyncStatus attribute 410 indicates the status of the transfer of an HMI application to the node where an associated HMI application is deployed.

A_NameSpace attribute 412 contains information regarding parameter tags that are part of an HMI application associated with an HMI application object. The_NameSpace attribute 412 is used to support browsing of the tags of the HMI application within an attribute browser.

A_ShutdownNotify attribute 414 is written to just prior to shutdown of an associated HMI application editor to ensure that an asynchronous method in progress completes before the editory process is allowed to shut down.

A_BeginDBMonitoring attribute 416 is written to when an HMI application editor starts up to ensure the HMI application object is loaded and validated properly when the edit session begins.

A LastModified attribute 418 specifies the last time the HMI application's version number was modified.

The HMI application object, by way of example, exhibits a runtime behavior summarized in the description that follows. When the HMI application object is executed (under the direction of a host view engine), logic incorporated into the HMI application object determines whether an HMI application incorporated within the HMI application object needs to be transferred from the configuration database 124. If a transfer needs to be initiated, then the transfer is started on the next scan of the HMI object by the view engine.

Synchronization can occur at any time after startup of the HMI application object. The HMI application object initiates synchronization of an HMI application with a source application. If pending synchronization operations are complete then the HMI object sets an attribute within the configuration database 124 to indicate that the transfer is complete. In accordance with an embodiment of the present invention, the synchronization application can comprise updating an encapsulated HMI application or individual symbol objects incorporated into the HMI application that have been updated within the configuration database 124. In the case of updating an HMI application, only application files within the configuration database 124 that differ from files currently on a node having an HMI application object instance incorporating the HMI application are transferred from the configuration database 124.

In accordance with an exemplary embodiment, a global centralized management interface supported by the IDE 126 is provided by way of example in **FIGs. 5a****-e** for defining overriding HMI application data quality and status behaviors within HMI application graphics that incorporate such display such status information. When active, the specified behaviors override any locally defined behaviors on deployed HMI application graphics. As noted above with reference to **FIG. 1****,** the quality and status behavior definition 123 is maintained in the configuration database 124 along with other centrally managed configuration information.

Within the IDE 126 configuration environment a user accesses (subject to check-in/out status) the data quality and status behavior definition 123 from any node on network running the IDE 126. In an exemplary embodiment, a user requests to edit the data quality and status definition 123 stored in the database 124. If the definition 123 has not been checked out and the user logged into the IDE has the appropriate permissions, then access is provided via a dialog (see, e.g., dialog box 500 in **FIG. 5a**) supported by the IDE 126. While a user edits the definition 123 its status is "checked-out". When a user closes the dialog for editing the definition 123, the checked-in copy of the definition is updated (if necessary) and the status is changed to "checked-in".

In the exemplary embodiment, the dialog box 500 is divided into the following main sections: enable/disable quality display 502, quality and status override options 504, configuration section 506, and command section 508. Enable/disable quality display 502 turns on/off the override behaviors stored in the checked-in version of the definition 123. The quality and status override options 504 displays the list of statuses/qualities and designated properties for each. The configuration section 506 is populated by detailed configuration options for a selected quality/status in the options 504. The command section 508 exposes actions to be performed with regard to dialog accessed definition. Each of these sections is describe further herein below with reference to **FIGs. 5b****-e.**

Referring briefly to **FIG. 5b****,** a user globally enables/disables the configured overriding behavior via an enable/disable button 512.

Referring to **FIG. 5c****,** an exemplary set of configurable data quality and status types are presented to a user for purposes of designating an overriding animation behavior. This list is associated with information supported by the MessageExchange messaging protocol incorporated into an exemplary system. An exemplary two-dimension grid 514 lists the set of supported data quality/statuses and a set of available display properties (the columns) used to convey the quality/status state (e.g., Text - Ts, Fill - Fs, Line - Ls, Status Primitive (icon set) - St, and Outline - O1) The user selects any number of the available display properties (none, some or all) for each listed data quality/status. In the illustrative example, the icon-based "Status Pimitive" display property is designated for each listed data quality/status state. If none of the supported override display properties are designated for a listed quality/status (e.g., Bad), then no action will be taken with regard to the display property when the associated quality/status is true. The listed qualities/statuses in the exemplary embodiment include:
1. Bad Quality - The data cannot be used. Maps to OPC Bad State.
2. Uncertain Quality - The data is questionable but can be used (for example, manually overriden data). Maps to OPC Uncertain state.
3. Initializing Quality - The data is not yet available, but will be soon. Maps to OPC Bad State with substatus of Initializing.
4. Communication Error Read Status - The request failed due to an error communicating with the target AutomationObject; or in the case of DeviceIntegrationObjects, the request failed due to an error communicating with the target device.
5. Configuration Error Read Status - The request failed due to an error in configuration. In the case of DeviceIntegration Objects, the request failed due to a bad item name or other invalid configuration of the object or server.
6. Operational Error Write Status - The request failed due to an illegal operator action. In the case of DeviceIntegration Objects, the request failed due to an invalid operator action. For example, trying to write to an item in a device when the device is currently in an operational mode that does not allow it to be modified, or trying to write a bad value that can not be accepted by the target device.
7. Software Error Write Status - The request failed due to an internal software error.
8. Security Error Write Status - The request failed due to insufficient security access rights.
9. Warning Write Status - This applies to sets only. The operation completed successfully but with some warning condition, such as clamping the value.
10. Pending Write Status - The request has been queued but has not yet completed. This is not an error status but an indication that the operation is in progress. The MxCategoryPending status is a transitory status and does not continue indefinitely.

Turning to **FIG. 5d****,** an exemplary arrangement is depicted for facilitating user entry of configurable characteristics, via the configuration section 506, of a globally implemented animation behavior (for a data quality/status selected from the list in grid 514). A Status Area 520 contains a name of the currently selected Status/Quality. A Preview Area 522 is automatically updated as the user navigates from field to field in the dialog. As the overrides are configured a preview of the configuration will be displayed. When a Reset to Default button 524 is selected, all values are reset to the default for the currently selected quality/status. With regard to a configuration area 526, clicking on the Image selection will open the standard File Open dialog box. The file may be one of the following standard image types: BMP, GIF, JPG (jpeg), TIF (tiff), PNG, ICO, EMF and WMF. Once an image is chosen, the image is updated. Clicking on a color selection opens the standard Color dialog box. Once a selection is chosen the color selection will be updated.

The following styles are individually configurable for a selected data quality/status, via the configuration section 506, with runtime overrides for each of the statuses listed in the grid 514 and described herein above.
1. Text - This will apply to any Text Box, Text Lable, Radio Buttons, Check Box, Edit Box, Combo Box, and List Box drawing element that has a configured animation. Each of the following options can be individually enabled or disabled.
   a. Font
   b. Color
   c. Blink
2. Fill - This will apply to any closed drawing element that supports a fill color and has a configured animation (ellipse, rectangle, rounded rectangle, polygon, button, closed curve, pie, or chord). Each of the following options can be individually enabled or disabled.
   a. Color
   b. Blink
3. Line - This will apply to any drawing element that supports a line color and has a configured animation (line, H/V line, ellipse, rectangle, rounded rectangle, polyline, polygon, button, curve, closed curve, arc, pie, or chord). Each of the following options can be individually enabled or disabled.
   a. Pattern
   b. Weight
   c. Color
   d. Blink
4. Status Graphic - This will apply to all status graphic elements (see, e.g., FIG. 6). Each of the following options can be individually enabled or disabled.
   a. Line Color
   b. Line Pattern
   c. Line Weight
   d. Fill Color
   e. Image
   f. Image Transparent Color
   g. Image Style
   h. Image Alignment
5. Outline - This is a line that will be drawn around the any graphic element that has a configured animation. The entire "outline" functionality can be disabled as a whole.
   a. Outline Color
   b. Outline Pattern
   c. Outline Weight
   d. Outline Blink

Referring to **FIG. 5e****,** the command section 508 provides a standard set of "ok" and "cancel" buttons to accept or discard a current set of changes associated with the dialog session. A preview legend button launches a new dialog box which graphically displays the appearance of the currently configured overrides.

### Status Graphic Drawing Element

Turning to **FIG. 6****,** in accordance with an exemplary embodiment, a status graphic drawing element is provided with other primitives (e.g., line, box, text box, etc.) on an HMI editor toolbar. However, in contrast to these purely graphical primitives, the status graphic drawing element includes a configurable icon set (see e.g., **FIG. 6** with default icon set) and animations corresponding to various data quality/status states of a user-configured data source. The displayed icon and/or animation represents a quality/status of data associated with the graphic to which the status graphic drawing element (e.g., icon) has been attached. In an exemplary embodiment, the status graphic drawing element appears on a toolbar with the other drawing elements of an HMI editor (e.g., WindowMaker). Upon selecting the status graphic drawing element tool with a mouse or other graphical interface pointing device a user clicks and drags a rectangle (representing the location of the status graphic drawing element) on the canvas to place the status graphic drawing element. During configuration the status graphic will show a generic graphic, as a place holder, as it appears on the toolbox (since there can be no status until runtime).

Once the data quality/status graphic element has been placed on the HMI view editor canvas, the user accesses the other available configurable aspects of the status graphic element by opening an animation editor. The status graphic possesses a predefined animation having the following two tabs:
1. Graphics - will show all the graphical elements on the current canvas that are linked to data. The user can select none, one, or many of the elements to associate with the status graphic drawing element.
2. Expression - This tab will allow the user to enter an expression directly that will contain references to data.

The data points linked in the associated graphics or called out explicitly in the expression are evaluated at runtime to determine what status and quality behavior (if any) will apply to the status graphic element.

### Runtime Execution of Quality and Status Behavior

As a graphic is displayed in a runtime viewer (e.g., WindowViewer) and the quality and status behavior is enabled, the specific behavior that has been configured will be assumed when any data point in the associated animation assumes one of the states listed in the Configurable Statuses section above. However, the following animations, when active, will negate the currently applicable quality and status behavior on a graphic:
1. Visibility Animation - If the element is current not visible because of a visibility animation then the quality and status behavior will not be shown.
2. Disable Animation - If an element currently has the disable animation active all user interaction animations will be excluded from the quality and status evaluation (user input, horizontal slider, vertical slider, push button, or script).
3. Animation is Disabled - Each animation can be individually configured to be disabled. When a particular animation type is disabled all data points configured in that animation will not be added to the quality and status evaluation.

Another aspect of runtime execution of configured data quality and status behavior for a graphic is the handling of multiple active statuses - leading to conflicting animations. In an exemplary embodiment, the displayed animation is determined by severity/precedence of statuses. For example, a rectangle graphical element is configured to have more than one data point associated with its animations. It will be possible then that more than one configured status is active at the same time for the rectangle graphical element. Only one of the configured quality and status behaviors is displayed at a time for any single element. Therefore precedence determines which one of multiple active statuses is applied. In an exemplary embodiment the following precedence order is utilized to select from multiple data statuses (high to low): Communication Error, Configuration Error, Pending, Operation Error, Software Error, Security Error, Warning, Bad, Uncertain, and Initializing.

The order in which the statuses are listed in the override list section 504 determines the order of precedence (Bad Quality data being the highest). For example, if the rectangle element had one point with Bad Quality and another point with a Configuration Error, and both of these statuses had been configured on the rectangle element, then only the Configuration Error behavior is actively displayed.

Furthermore, certain ones of the supported data quality/statuses represent information about a point in time and will not persist indefinitely. These statuses are shown for a minimum hold period of 20 seconds and then the value will return to the present state if the status is no longer present. This ensures that any quality/status failure will be displayed to a user for at least 20 seconds.

Another aspect of the data quality and status behavior configuration scheme described herein is the updating of configured behavior when the definition 123 changes. In an exemplary embodiment, the centrally defined data quality and status behavior definition 123 maintained in the configuration database 124 is propagated to all nodes within the system (e.g., Galaxy). Changes to the configured data quality and status behavior definition 123 are delivered, without request from affected workstations, automatically using global data update functionality supported by the configuration database 123 and database engine 122. Furthermore, the definitions are updated without deploying any objects or shutting down running HMI applications. When the changes are received, the affected graphics will redraw using the updated globally applied overriding data quality and status behavior definition.

In view of the many possible embodiments to which the principles of this disclosed system may be applied, it should be recognized that the embodiments described herein with respect to the drawing figures are meant to be illustrative only and should not be taken as limiting the scope of invention. For example, those of skill in the art will recognize that some elements of the illustrated embodiments shown in software, stored on computer-readable media in the form of computer executable instructions, may be implemented in hardware and vice versa. Therefore, the invention as described herein contemplates all such embodiments as may come within the scope of the following claims and equivalents thereof.

## Claims

1. A networked computer system for facilitating centralized management of configuration and propagation of data quality and status behaviors for graphical elements within human machine interface (HMI) applications distributable across multiple nodes of the system, the networked computer system comprising:
a computer node including a computer-readable medium comprising a configuration database for maintaining a global data quality and status behaviors definition in a central configuration storage;
a computer node including a computer-readable medium comprising computer-executable instructions for a definition editor including a user interface supporting designation of data quality and status behaviors defined within the global data quality and status behaviors definition; and
wherein the computer node including the configuration database comprises further computer-executable instructions for a definition distribution mechanism for propagating changes to the global data quality and status behaviors definition to a set of remote nodes executing HMI applications on a network, wherein the HMI applications include graphics associated with data having associated qualities and statuses.

2. The networked computer system of claim 1 further comprising a status graphic element data quality and status display property, wherein the definition editor comprises computer-executable instructions for configuring the status graphic element for a designated data source.

3. The networked computer system of claim 2 wherein the status graphic element comprises a set of icons corresponding to a set of supported data qualities and statuses.

4. The networked computer system of claim 1 wherein changes to the global data quality and status behaviors definition are delivered without requests from workstations affected by the changes.

5. The networked computer system of claim 1 wherein workstations comprise computer-executable instructions for re-drawing affected graphics in response to receiving changes to the global data quality and status behaviors definition.

6. The networked computer system of claim 1 wherein the definition editor comprises computer-executable instructions for presenting, on a workstation, an editor dialog graphical user interface including a global enable control that, when selected, causes the global data quality and status behaviors definition to override non-global data quality and status behaviors.

7. The networked computer system of claim 1 wherein the definition editor comprises computer-executable instructions for presenting, on a workstation, an editor dialog graphical user interface including a listing of supported data quality and status types.

8. The networked computer system of claim 1 wherein the definition editor comprises computer-executable instructions for presenting, on a workstation, an editor dialog graphical user interface including a list of configurable display properties for conveying a data quality or status.

9. The networked computer system of claim 8 wherein the editor dialog graphical user interface includes a display properties editor box for configuring a particular display property from the list of configurable display properties.

10. A method for configuring and propagating data status behaviors for graphical elements within human machine interface (HMI) applications distributable across multiple nodes of a networked computer system, the method comprising:
maintaining, by a computer node including a computer-readable medium comprising a configuration database, a global data quality and status behaviors definition in a central configuration storage;
providing a definition editor on a computer node, the definition editor including a user interface supporting designation of data quality and status behaviors defined within the global data quality and status behaviors definition; and
wherein the computer node including the configuration database comprises further computer-executable instructions for a definition distribution mechanism, and the method comprises the further step of propagating, by the definition distribution mechanism, changes to the global data quality and status behaviors definition to a set of remote nodes executing HMI applications on a network, wherein the HMI applications include graphics associated with data having associated qualities and statuses.

11. The method of claim 1 further comprising configuring a status graphic element data quality and status display property for a designated data source via the definition editor.

12. The method of claim 11 wherein the status graphic element comprises a set of icons corresponding to a set of supported data qualities and statuses.

13. The method of claim 1 wherein the propagating step comprises delivering changes to the global data quality and status behaviors definition without requests from workstations affected by the changes.

14. The method of claim 10 further comprising re-drawing affected graphics in response to receiving changes to the global data quality and status behaviors definition.

15. The method of claim 10 further comprising the step of presenting, via the definition editor, on a workstation, an editor dialog graphical user interface including a global enable control that, when selected, causes the global data quality and status behaviors definition to override non-global data quality and status behaviors.

## Patentansprüche

1. Vernetztes Computersystem zum Vereinfachen einer zentralisierten Verwaltung hinsichtlich der Konfiguration und Verbreitung von Datenqualitäts- und -statusverhaltensweisen für graphische Elemente in Mensch-Maschine-Schnittstellen (MMS)-Anwendungen, die über mehrere Knoten des Systems verteilbar sind, wobei das vernetzte Computersystem umfasst:
einen Computerknoten mit einem computerlesbaren Medium, umfassend eine Konfigurationsdatenbank zum Pflegen einer Definition von Globaldatenqualitäts- und -statusverhaltensweisen in einem zentralen Konfigurationsspeicher;
einen Computerknoten mit einem computerlesbaren Medium, umfassend von einem Computer ausführbare Anweisungen für einen Definitionseditor mit einer Anwenderschnittstelle, die die Festlegung von Datenqualitäts- und -statusverhaltensweisen unterstützt, die in der Definition von Globaldatenqualitäts- und -statusverhaltensweisen definiert sind; und
wobei der Computerknoten mit der Konfigurationsdatenbank weitere von einem Computer ausführbare Anweisungen für einen Definitionsverteilungsmechanismus zum Verbreiten von Änderungen hinsichtlich der Definition von Globaldatenqualitäts- und - statusverhaltensweisen auf eine Reihe von computerfernen Knoten, die MMS-Anwendungen ausführen, auf einem Netzwerk umfasst, wobei die MMS-Anwendungen Grafiken aufweisen, die mit Daten assoziiert sind, die zugehörige Qualitäten und Status aufweisen.

2. Vernetztes Computersystem nach Anspruch 1, weiter umfassend eine Statusgraphikelementdatenqualität und Statusanzeigeeigenschaft, wobei der Definitionseditor von einem Computer ausführbare Anweisungen zum Konfigurieren des Statusgraphikelements für eine festgelegte Datenquelle umfasst.

3. Vernetztes Computersystem nach Anspruch 2, wobei das Statusgraphikelement eine Reihe von Symbolen umfasst, die einer Reihe von unterstützten Datenqualitäten und -status entsprechen.

4. Vernetztes Computersystem nach Anspruch 1, wobei Änderungen der Definition der Globaldatenqualitäts- und -statusverhaltensweisen ohne Anfragen von Arbeitsstationen abgegeben werden, die von den Änderungen betroffen sind.

5. Vernetztes Computersystem nach Anspruch 1, wobei Arbeitsstationen von einem Computer ausführbare Anweisungen zum erneuten Zeichnen von betroffenen Grafiken als Reaktion auf das Empfangen von Änderungen hinsichtlich der Definition von Globaldatenqualitäts- und -statusverhaltensweisen umfassen.

6. Vernetztes Computersystem nach Anspruch 1, wobei der Definitionseditor von einem Computer ausführbare Anweisungen zum Präsentieren einer Editordialoggraphikanwenderschnittstelle mit einer globalen Freigabesteuerung auf einer Arbeitsstation umfasst, die, wenn sie ausgehöhlt wird, bewirkt, dass die Definition von Globaldatenqualitäts- und -statusverhaltensweisen die Nicht-Globaldatenqualitäts- und -statusverhaltensweisen aufhebt.

7. Vernetztes Computersystem nach Anspruch 1, wobei der Definitionseditor von einem Computer ausführbare Anweisungen zum Präsentieren einer Editordialoggrafikanwenderschnittstelle mit einer Liste von unterstützten Datenqualitäts- und -statusarten auf einer Arbeitsstation umfasst.

8. Vernetztes Computersystem nach Anspruch 1, wobei der Definitionseditor von einem Computer ausführbare Anweisungen zum Präsentieren einer Editordialoggrafikanwenderschnittstelle mit einer Liste von konfigurierbaren Anzeigeeigenschaften zum Übermitteln einer Datenqualität oder eines Datenstatus auf einer Arbeitsstation umfasst.

9. Vernetztes Computersystem nach Anspruch 8, wobei die Editordialoggraphikanwenderschnittstelle eine Anzeigeeigenschafteneditorbox zum Konfigurieren einer bestimmten Anzeigeeigenschaft aus der Liste von konfigurierbaren Anzeigeeigenschaften aufweiset.

10. Verfahren zum Konfigurieren und Verbreiten von Datenstatusverhaltensweisen für grafische Elemente in Mensch-Maschine-Schnittstellen (MMS)-Anwendungen, die über mehrere Knoten eines vernetzten Computersystems verteilbar sind, wobei das Verfahren umfasst:
Pflegen einer Definition von Globaldatenqualitäts- und -statusverhaltensweisen in einem zentralen Konfigurationsspeicher mittels eines Computerknotens mit einem computerlesbaren Medium, umfassend eine Konfigurationsdatenbank;
Bereitstellen eines Definitionseditors auf einem Computerknoten, wobei der Definitionseditor eine Anwenderschnittstelle aufweiset, die die Bestimmung der Datenqualitäts- und -statusverhaltensweisen unterstützt, die in der Definition von Globaldatenqualitäts- und -statusverhaltensweisen definiert sind; und
wobei der Computerknoten mit der Konfigurationsdatenbank weitere von einem Computer ausführbare Anweisungen für einen Definitionsverteilungsmechanismus umfasst und das Verfahren den weiteren Schritt des Verbreitens von Änderungen hinsichtlich der Definition von Globaldatenqualitäts- und -statusverhaltensweisen durch den Definitionsverteilungsmechanismus auf eine Reihe von computerfernen Knoten, die MMS-Anwendungen ausführen, auf einem Netzwerk umfasst, wobei die MMS-Anwendungen Grafiken aufweisen, die mit Daten assoziiert sind, die zugehörige Qualitäten und Status aufweisen.

11. Verfahren nach Anspruch 1, weiter umfassend das Konfigurieren einer Statusgrafikelementdatenqualität und Statusanzeigeeigenschaft für eine festgelegte Datenquelle über den Definitionseditor.

12. Verfahren nach Anspruch 11, wobei das Statusgrafikelement eine Reihe von Symbolen umfasst, die einer Reihe von unterstützten Datenqualitäten und -status entsprechen.

13. Verfahren nach Anspruch 1, wobei der Schritt des Verbreitens die Abgabe von Änderungen hinsichtlich der Definition von Globaldatenqualitäts- und -statusverhaltensweisen ohne Anfragen von Arbeitsstationen, die von den Änderungen betroffen sind, umfasst.

14. Verfahren nach Anspruch 10, weiter umfassend das erneute Zeichnen von betroffenen Grafiken als Reaktion auf das Empfangen von Änderungen der Definition von Globaldatenqualitäts- und -statusverhaltensweisen.

15. Verfahren nach Anspruch 10, weiter umfassend den Schritt des Präsentierens einer Editordialoggrafikanwenderschnittstelle mit einer globalen Freigabesteuerung auf einer Arbeitsstation über den Definitionseditor, die, wenn sie ausgewählt wird, bewirkt, dass die Definition der Globaldatenqualitäts- und -statusverhaltensweisen die Nicht-Globaldatenqualitäts- und -statusverhaltensweisen aufhebt.

## Revendications

1. Système d'ordinateurs en réseau pour faciliter la gestion centralisée de la configuration et la propagation de comportements de qualité et d'état de données pour des éléments graphiques dans des applications d'interface homme-machine (IHM) distribuables sur plusieurs noeuds du système, le système d'ordinateurs en réseau comprenant :
un noeud d'ordinateur comprenant un support lisible par ordinateur comprenant une base de données de configuration pour maintenir une définition globale de comportements de qualité et d'état de données dans un stockage de configuration central;
un noeud d'ordinateur comprenant un support lisible par ordinateur comprenant des instructions exécutables par ordinateur pour un éditeur de définition incluant une interface utilisateur prenant en charge la désignation de comportements de qualité de données et d'état définis dans la définition globale de comportements de qualité de données et d'état ; et
dans lequel le noeud d'ordinateur incluant la base de données de configuration comprend d'autres instructions exécutables par ordinateur pour un mécanisme de distribution de définition pour propager des changements à la définition globale de comportements de qualité de données et d'état à un ensemble de noeuds distants exécutant des applications IHM sur un réseau, dans lequel les applications IHM comprennent des graphiques associés à des données ayant des qualités et des états associés.

2. Système d'ordinateurs en réseau selon la revendication 1, comprenant en outre une propriété d'affichage d'état et de qualité de données d'élément graphique d'état, dans lequel l'éditeur de définition comprend des instructions exécutables par ordinateur pour configurer l'élément graphique d'état pour une source de données désignée.

3. Système d'ordinateurs en réseau selon la revendication 2, dans lequel l'élément graphique d'état comprend un ensemble d'icônes correspondant à un ensemble de qualités et d'états de données pris en charge.

4. Système d'ordinateurs en réseau selon la revendication 1, dans lequel des changements à la définition globale de comportements de qualité et d'état de données sont fournis sans requêtes depuis des postes de travail affectés par les changements.

5. Système d'ordinateurs en réseau selon la revendication 1, dans lequel les postes de travail comprennent des instructions exécutables par ordinateur pour redessiner des graphiques affectés en réponse à la réception de changements de la définition globale des comportements de qualité et d'état des données.

6. Système d'ordinateurs en réseau selon la revendication 1, dans lequel l'éditeur de définitions comprend des instructions exécutables par ordinateur pour présenter, sur un poste de travail, une interface utilisateur graphique de dialogue d'éditeur comprenant une commande de validation globale qui, lorsqu'elle est sélectionnée, amène la définition globale des comportements de qualité et d'état des données à substituer les comportements non globaux de qualité et d'état des données.

7. Système d'ordinateurs en réseau selon la revendication 1, dans lequel l'éditeur de définition comprend des instructions exécutables par ordinateur pour présenter, sur un poste de travail, une interface utilisateur graphique de dialogue d'éditeur incluant une liste de types de qualité et d'état de données pris en charge.

8. Système d'ordinateurs en réseau selon la revendication 1, dans lequel l'éditeur de définition comprend des instructions exécutables par ordinateur pour présenter, sur une station de travail, une interface utilisateur graphique de dialogue d'éditeur incluant une liste de propriétés d'affichage configurables pour transmettre une qualité ou un état de données.

9. Système d'ordinateurs en réseau selon la revendication 8, dans lequel l'interface utilisateur graphique de dialogue d'éditeur comprend une boîte d'édition de propriétés d'affichage pour configurer une propriété d'affichage particulière à partir de la liste des propriétés d'affichage configurables.

10. Procédé de configuration et de propagation de comportements d'état de données pour des éléments graphiques dans des applications d'interface homme-machine (IHM) distribuables sur plusieurs noeuds d'un système d'ordinateurs en réseau, le procédé comprenant les étapes consistant à :
maintenir, par un noeud d'ordinateur comprenant un support lisible par ordinateur comprenant une base de données de configuration, une définition globale de comportements de qualité et d'état de données dans une mémoire de configuration centrale ;
fournir un éditeur de définitions sur un noeud d'ordinateur, l'éditeur de définitions comprenant une interface utilisateur prenant en charge la désignation de comportements de qualité et d'état des données définis dans la définition globale des comportements de qualité et d'état des données ; et
dans lequel le noeud d'ordinateur incluant la base de données de configuration comprend d'autres des instructions exécutables par ordinateur pour un mécanisme de distribution de définition, et le procédé comprend l'étape supplémentaire consistant à propager, par le mécanisme de distribution de définition, des changements à la définition globale de comportements de qualité et d'état de données à un ensemble de noeuds distants exécutant des applications IHM sur un réseau, les applications IHM incluant des graphiques associés à des données ayant des qualités et des états associés.

11. Procédé selon la revendication 1, comprenant en outre la configuration d'une propriété d'affichage de qualité de données et d'état d'élément graphique d'état et d'une propriété d'affichage d'état pour une source de données désignée via l'éditeur de définition.

12. Procédé selon la revendication 11, dans lequel l'élément graphique d'état comprend un ensemble d'icônes correspondant à un ensemble de qualités et d'états de données pris en charge.

13. Procédé selon la revendication 1, dans lequel l'étape de propagation comprend la fourniture de changements à la définition globale de comportements de qualité et d'état de données sans requêtes depuis des postes de travail affectés par les changements.

14. Procédé selon la revendication 10, comprenant en outre de redessiner des graphiques affectés en réponse à la réception de changements à la qualité globale des données et à la définition des comportements d'état.

15. Procédé selon la revendication 10, comprenant en outre l'étape de présentation, via l'éditeur de définition, sur une station de travail, d'une interface utilisateur graphique de dialogue d'éditeur comprenant une commande globale de validation qui, une fois sélectionnée, amène la définition globale des comportements de qualité et d'état des données à substituer des comportements non globaux de qualité et d'état des données.
